(19) Europäisches Patentamt
European Patent Office
Office européen des brevets

(11) **EP 4 366 112 A1**

(12) **EUROPEAN PATENT APPLICATION**
published in accordance with Art. 153(4) EPC

(43) Date of publication:
**08.05.2024   Bulletin 2024/19**

(21) Application number: **22912992.9**

(22) Date of filing: **14.03.2022**

(51) International Patent Classification (IPC):
***H02J 3/50*** *(2006.01)*        ***H02J 3/16*** *(2006.01)*

(52) Cooperative Patent Classification (CPC):
**H02J 3/16; H02J 3/50**

(86) International application number:
**PCT/CN2022/080727**

(87) International publication number:
**WO 2023/123686 (06.07.2023 Gazette 2023/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **30.12.2021   CN 202111682431**

(71) Applicant: **Beijing Goldwind Science & Creation Windpower Equipment Co. Ltd.**
**Beijing 100176 (CN)**

(72) Inventor: **WU, Lei**
**Beijing 100176 (CN)**

(74) Representative: **Gulde & Partner**
**Patent- und Rechtsanwaltskanzlei mbB**
**Wallstraße 58/59**
**10179 Berlin (DE)**

(54) **METHOD AND APPARATUS FOR ADJUSTING REACTIVE POWER IN WIND FARM, AND ELECTRONIC DEVICE**

(57)    The present application discloses a method and apparatus for adjusting a reactive power in a wind farm and an electronic device. The method for adjusting a reactive power in a wind farm includes: acquiring a wind farm reactive control parameter issued by a grid to the wind farm; calculating an average reactive control parameter for each of wind turbines in the wind farm according to the wind farm reactive control parameter; modifying, for each of the wind turbines, the average reactive control parameter according to a difference between a voltage of the wind turbine at a point of common coupling and a preset voltage limit to obtain wind turbine reactive control parameters of the respective wind turbines; and outputting the wind turbine reactive control parameters to the respective wind turbines.

acquiring a wind farm reactive control parameter issued by a grid to the wind farm — 101

calculating an average reactive control parameter for each of wind turbines in the wind farm according to the wind farm reactive control parameter — 102

modifying, for each of the wind turbines, the average reactive control parameter according to a difference between a voltage of the wind turbine at a point of common coupling and a preset voltage limit to obtain wind turbine reactive control parameters of the respective wind turbines — 103

outputting the wind turbine reactive control parameters to the respective wind turbines — 104

**Fig. 1**

## Description

## CROSS-REFFERENCE TO RELATED APPLICATION

The application claims priority to Chinese Patent Application No. 202111682431.7 filed on December 30, 2021 and titled with "METHOD AND APPARATUS FOR ADJUSTING REACTIVE POWER IN WIND FARM, AND ELECTRONIC DEVICE", which is incorporated herein by reference in its entirety.

## TECHINICAL FIELD

The present application relates to the technical field of power adjustment, and in particular to a method and an apparatus for adjusting a reactive power in a wind farm and an electronic device.

## BACKGROUND

In a wind farm, due to inconsistent distances of transmission lines from respective locations of a cluster of wind turbines to a booster station, there are differences in voltages at the respective locations of wind turbines. When a reactive power in the wind farm is adjusted, it is required to limit the adjustment of the reactive power in the wind farm by consideration of a wind turbine with a highest voltage and a wind turbine with a lowest voltage to avoid that a wind turbine voltage protection would be triggered at a location of the wind turbine with the highest voltage or with the lowest voltage, but such limitation results that a reactive power for the cluster of wind turbines in the wind farm is limited.

## SUMMARY

Embodiments of the present application provide a method and an apparatus for adjusting a reactive power in a wind farm and an electronic device, which can solve the technical problem in the related arts that a reactive power for a cluster of wind turbines in a wind farm is limited due to different voltages at respective locations of the wind turbines.

In a first aspect, the embodiments of the application provide a method for adjusting a reactive power in a wind farm, including:

acquiring a wind farm reactive control parameter issued by a grid to the wind farm;
calculating an average reactive control parameter for each of wind turbines in the wind farm according to the wind farm reactive control parameter;
modifying, for each of the wind turbines, the average reactive control parameter according to a difference between a voltage of the wind turbine at a point of common coupling and a preset voltage limit to obtain wind turbine reactive control parameters of the respective wind turbines; and

outputting the wind turbine reactive control parameters to the respective wind turbines.

In a second aspect, the embodiments of the application provide an apparatus for adjusting a reactive power in a wind farm, including:

an acquisition unit configured to acquire a wind farm reactive control parameter issued by a grid to the wind farm;
a calculation unit configured to calculate an average reactive control parameter for each of wind turbines in the wind farm according to the wind farm reactive control parameter;
a modification unit configured to modify, for each of the wind turbines, the average reactive control parameter according to a difference between a voltage of the wind turbine at a point of common coupling and a preset voltage limit to obtain wind turbine reactive control parameters of the respective wind turbines; and
an outputting unit configured to output the wind turbine reactive control parameters to the respective wind turbines.

In a third aspect, the embodiments of the application provide an electronic device. The electronic device includes: a processor and a memory storing program instructions, wherein the processor is configured to execute the program instructions to implement the method for adjusting a reactive power in a wind farm as described according to the embodiments of the present application in the first aspect.

In a fourth aspect, the embodiments of the application provide a readable storage medium storing program instructions, which are executable by a processor to implement the method for adjusting a reactive power in a wind farm as described according to the embodiments of the present application in the first aspect.

In a fifth aspect, the embodiments of the application provide a program product including instructions, which are executable by a processor of an electronic device to implement the method for adjusting a reactive power in a wind farm as described according to the embodiments of the present application in the first aspect.

According to the method and apparatus for adjusting a reactive power in a wind farm, the electronic device, the readable storage medium and the program product, a wind farm reactive control parameter issued by a grid to the wind farm is acquired; an average reactive control parameter for each of wind turbines in the wind farm is calculated according to the wind farm reactive control parameter; the average reactive control parameter for each of the wind turbines is modified according to a difference between a voltage of the wind turbine at a point of common coupling and a preset voltage limit to obtain wind turbine reactive control parameters of the respective wind turbines; and the wind turbine reactive control parameters are outputted to the respective wind turbines. With the embodiments of the present application, the technical problem in the related arts that a reactive power for a cluster of wind turbines in a wind farm is limited due to different voltages at respective locations of the wind turbines can be solved by providing an adaptive adjustment for voltages of the respective wind turbines, in which a reactive output for a wind turbine is reduced when a voltage of the wind turbine approaches to a fault protection threshold so as to avoid it entering a fault state, thereby increasing a reactive output for the cluster of wind turbine in the wind farm.

## BRIEF DESCRIPTION OF THE DRAWINGS

In order to illustrate technical solutions of the embodiments of the present application more clearly, the following briefly introduces the accompanying drawings that need to be used in the embodiments of the present application. For those skilled in the art, other drawings can be obtained from these drawings without inventive efforts.

Fig. 1 is a schematic flowchart of a method for adjusting a reactive power in a wind farm according to an embodiment of the present application;
Figs. 2a and 2b are schematic diagrams illustrating principles of a method for adjusting a reactive power in a wind farm according to an embodiment of the present application;
Figs. 3a and 3b are schematic diagrams illustrating principles of a method for adjusting a reactive power in a wind farm according to another embodiment of the present application;
Figs. 4a and 4b are schematic diagrams illustrating principles of a method for adjusting a reactive power in a wind farm according to another embodiment of the present application;
Figs. 5a and 5b are schematic diagrams illustrating principles of a method for adjusting a reactive power in a wind farm according to yet another embodiment of the present application;
Fig. 6 is a schematic structure diagram of an apparatus for adjusting a reactive power in a wind farm according to an embodiment of the present application; and
Fig. 7 is a schematic structure diagram of an electronic device according to an embodiment of the present application.

## DETAILED DESCRIPTION

The features and exemplary embodiments of various aspects of the present application will be described in detail below. In order to make the purpose, technical solutions and advantages of the present application more clear, the present application will be further described in detail below with reference to the accompanying drawings and embodiments. It should be understood that the specific embodiments described herein are only intended to explain the present application, but not to limit the present application. For those skilled in the art, the present application may be practiced without some of these specific details. The following description of the embodiments is merely to provide a better understanding of the present application by illustrating examples of the present application.

It should be noted that, in this document, relational terms such as "first" and "second", etc. are used only to distinguish one entity or operation from another entity or operation, and do not necessarily require or imply any such actual relationship or sequence between these entities or operations. Moreover, the terms "comprise", "include" or any other variation thereof are intended to encompass a non-exclusive inclusion such that a process, method, article or device that includes a list of elements includes not only those elements, but also includes elements which are not explicitly listed or other elements inherent to such a process, method, article or device. Without further limitation, a process, method, article, or device defined by the phrase "comprises an element" does not preclude presence of additional elements in the process, method, article, or device which includes the element.

In a wind farm, distances of transmission lines from respective locations of a cluster of wind turbines to a booster station are inconsistent, so when a reactive power of the wind farm is adjusted, in consideration of differences in voltages at the respective locations of the wind turbines, a reactive output (reactive power) of the wind farm is limited by reactive capabilities of a wind turbine with a highest voltage and a wind turbine with a lowest voltage in order to avoid the adjustment of the reactive power would trigger wind turbine voltage protection , but such limitation results that a reactive output for the cluster of wind turbines is limited.

In order to solve the problem in the related arts, the embodiments of the present application provide a method, apparatus and device for adjusting a reactive power in a wind farm and a readable storage medium. The method for adjusting a reactive power in a wind farm according to an embodiment of the present application will be firstly described below.

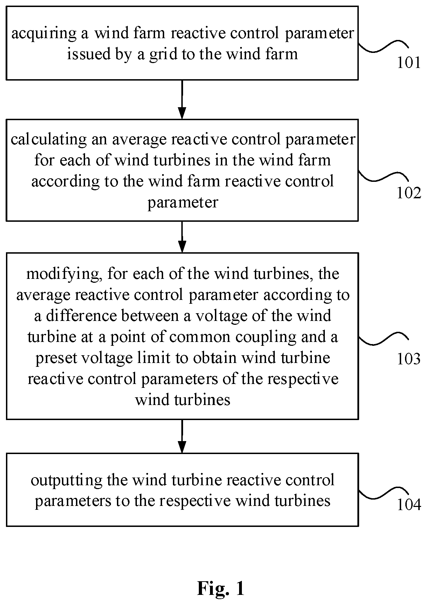

Fig. 1 illustrates a schematic flowchart of a method for adjusting a reactive power in a wind farm according to an embodiment of the present application. As shown in Fig. 1, the method includes the following steps 101 to 104.

At step 101, a wind farm reactive control parameter issued by a grid to the wind farm is acquired.

The wind farm reactive control parameters issued by the grid to the wind farm may be issued through a reactive instruction. Specifically, the wind farm reactive control parameter may be a reactive power value or a reactive voltage value.

At step 102, an average reactive control parameter for each of wind turbines in the wind farm is calculated according to the wind farm reactive control parameter.

The average reactive control parameter for each of wind turbines in the wind farm may be used as a benchmark for adaptive adjustment of the wind turbine.

For calculation of the average reactive control parameter for each of wind turbines in the wind farm according to the wind farm reactive control parameter, it may be done in an optional implementation by: calculating a reactive loss parameter of the wind farm reactive control parameter according to an on-farm loss coefficient; adjusting, by a first proportional integral controller, a reactive parameter difference to obtain a reactive parameter error; and calculating the average reactive control parameter based on a number of the wind turbines in the wind farm and a sum of the reactive loss parameter and the reactive parameter error.

The reactive parameter difference is a difference between the wind farm reactive control parameter and a measured reactive parameter which is collected at the point of common coupling (Point of Common Coupling, PCC) for the wind farm. Under a condition that the wind farm reactive control parameter is a reactive power value, the measured reactive parameter is also a reactive power value; and under a condition that the wind farm reactive control parameter is a reactive voltage value, the measured reactive parameter is also a reactive voltage value.

Optionally, the step 102 may be performed by a farm statin, such that a limitation step is applied on the average reactive control parameter outputted by the farm station to limit an upper limit and a lower limit of the average reactive control parameter output through a ring of the farm station.

At step 103, for each of the wind turbines, the average reactive control parameter is modified according to a difference between a voltage of the wind turbine at a point of common coupling and a preset voltage limit, to obtain wind turbine reactive control parameter of the respective wind turbines.

The step 103 is provided to adaptively adjust the reactive control parameter of each of the wind turbines.

Optionally, for implementation of the step 103, it may be done by: calculating a first voltage value based on a difference between a preset voltage upper limit and the voltage at the point of common coupling, calculating a second voltage value based on a difference between a preset voltage lower limit and the voltage at the point of common coupling; limiting the first voltage value to be not smaller than 0, limiting the second voltage value to be not greater than 0, and with such constraints of the first voltage value and the second voltage value, calculating a reactive control modification parameter for the wind turbine based on the first voltage value and the second voltage value; and after obtaining the reactive control modification parameter, calculating a sum of the average reactive control parameter and the reactive control modification parameter to obtain the wind turbine reactive control parameter of the wind turbine.

At step 104, the wind turbine reactive control parameters are outputted to the respective wind turbines.

After obtaining the adaptively adjusted wind turbine reactive control parameters, the wind turbine reactive control parameters can be outputted to the respective wind turbines so as to control each of the wind turbines.

Optionally, for outputting the wind turbine reactive control parameters to the respective wind turbines, it may be done by: adjusting, by a fourth proportional integral controller, a difference between the wind turbine reactive power parameter of each of the wind turbines and a reactive parameter collected at the point of common coupling for the wind turbine to obtain a reactive current target value of the wind turbine; and controlling a reactive current of the wind turbine by taking the reactive current target value as a target.

According to the method for adjusting a reactive power in a wind farm, a wind farm reactive control parameter issued by a grid to the wind farm is acquired; an average reactive control parameter for each of wind turbines in the wind farm is calculated according to the wind farm reactive control parameter; the average reactive control parameter for each of the wind turbines is modified according to a difference between a voltage of each of the wind turbines at a point of common coupling and a preset voltage limit to obtain wind turbine reactive control parameters of the respective wind turbines; and the wind turbine reactive control parameters are outputted to the respective wind turbines. With the embodiments of the present application, the technical problem in the related arts that a reactive power for a cluster of wind turbines in a wind farm is limited due to different voltages at respective locations of the wind turbines can be solved by providing an adaptive adjustment for voltages of the respective wind turbines, in which a reactive output for a wind turbine is reduced when a voltage of the wind turbine approaches to a fault protection threshold so as to avoid it entering a fault state, thereby increasing a reactive output for the cluster of wind turbine in the wind farm.

Several optional implementations of the method for adjusting a reactive power in a wind farm according to the embodiments of the present application will be described below.

First Optional Implementation:

For the calculation of the first voltage value based on the difference between the preset voltage upper limit and the voltage at the point of common coupling, it may be done by: calculating the difference between the preset voltage upper limit and the voltage at the point of common coupling to obtain the first voltage value; for the calculation of the second voltage value based on the difference between the preset voltage lower limit and the voltage at the point of common coupling, it may be done by: calculating the difference between the preset voltage lower limit and the voltage at the point of common coupling to obtain the second voltage value.

Furthermore, for the calculation of the reactive control modification parameter of the wind turbine based on the first voltage value and the second voltage value, it may be done by: calculating a sum of the first voltage value and the second voltage value to obtain a third voltage; and calculating a product of the third voltage and a droop coefficient to obtain the reactive control modification parameter.

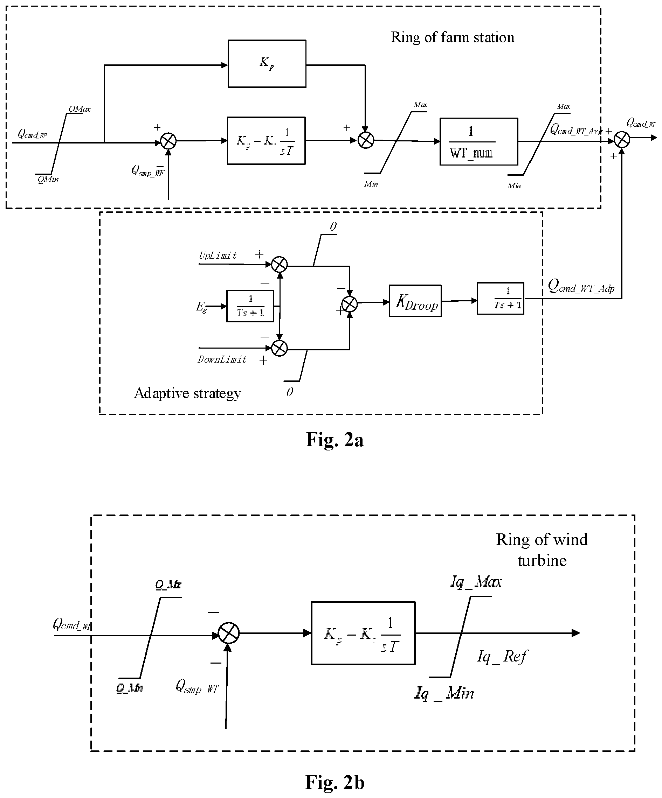

A schematic diagram of control principles of a specific example is illustrated in Fig. 2a and Fig. 2b. Upon the wind farm station receives the wind farm reactive control parameter (specifically a reactive power of the wind farm) $Q_{cmd\_WF}$ issued by the grid, a farm station controller is firstly utilized to convert the received instruction into an instruction for a wind turbine, which involves a specific process including:

(1) The wind farm reactive control parameter $Q_{cmd\_WF}$ is multiplied by an on-farm loss coefficient $K_p$ to form a feedforward component (i.e. the reactive loss parameter), which is used as a main component.
(2) A difference between the wind farm reactive control parameter $Q_{cmd\_WF}$ and a reactive power (i.e. the measured reactive parameter) $Q_{smp\_WF}$ collected at the point of common coupling for the wind farm is calculated to obtain a reactive parameter difference, which is then subjected to a closed-loop adjustment by a proportional integral controller (PI) (i.e. the first proportional integral controller) to obtain an error elimination component (i.e. the reactive parameter error).
An example formula used by the PI controller according to the embodiments of the present application may be
$$K_p + K_i \frac{1}{sT}.$$
(3) The feedforward component (i.e. the reactive loss parameter) and the error elimination component (i.e. the reactive parameter error) is added to obtain a sum, and then the sum (after being subjected to an amplitude limitation) is divided by a number WT_num of wind turbines currently operating in the wind farm, and then is subjected to an amplitude limitation to obtain an average reactive control parameter $Q_{cmd\_WT\_Avg}$ for the wind turbine.

After obtaining the average reactive control parameter $Q_{cmd\_WT\_Avg}$, a reactive power is adaptively allocated for the wind turbine according to a voltage of the wind turbine at the point of common coupling. An allocation process of the adaptive strategy includes:

(1) The voltage $E_g$ of the wind turbine at the point of common coupling is collected and filtered by using a 1/(Ts+1) filter.
(2) A maximum value of the first voltage value (i.e., a voltage upper limit UpLimit-$E_g$ filter value) is limited to 0, and a minimum value of the second voltage value (i.e., a voltage lower limit DownLimit-$E_g$ filter value) is limited to 0. Such limitation can be called as amplitude limitation. The first voltage value and the second voltage value, which have been subjected to the amplitude limitation, are added together, and then is multiplied by a droop coefficient $K_{Droop}$, and is further filtered by using the filter, to obtain an adaptive modification value (i.e. the reactive control modification parameter) $Q_{cmd\_WT\_Adp}$ of the reactive instruction for the wind turbine;

The average reactive power for the wind turbine (i.e. the average reactive control parameter) $Q_{cmd\_WT\_Avg}$ is added with the adaptive modification value of the reactive instruction (i.e. the reactive control modification parameter) $Q_{cmd\_WT\_Adp}$, to obtain a reactive power (i.e. the wind turbine reactive control parameter) $Q_{cmd\_WT}$ for the wind turbine.

After obtaining the wind turbine reactive power $Q_{cmd\_WT}$, a control is outputted to the wind turbine. An execution strategy of a rind of the wind turbine may specifically include:

(1) A difference between the wind turbine reactive power $Q_{cmd\_WT}$ of the wind turbine and the reactive power of the wind turbine $Q_{smp\_WT}$ collected at the point of common coupling is calculated, and is subjected to a closed-loop adjustment by the PI controller to obtain a reactive current target value $I_{q\_Ref}$.
(2) A reactive current is outputted by the wind turbine according to the $I_{q\_Ref}$.

Second Optional Implementation:

On the basis of the first optional implementation, in the calculation of the first voltage value based on the difference between the preset voltage upper limit and the voltage at the point of common coupling and in the calculation of the second voltage value based on the difference between the preset voltage lower limit and the voltage at the point of common coupling, the voltage at the point of common coupling may be a voltage after being filtered.

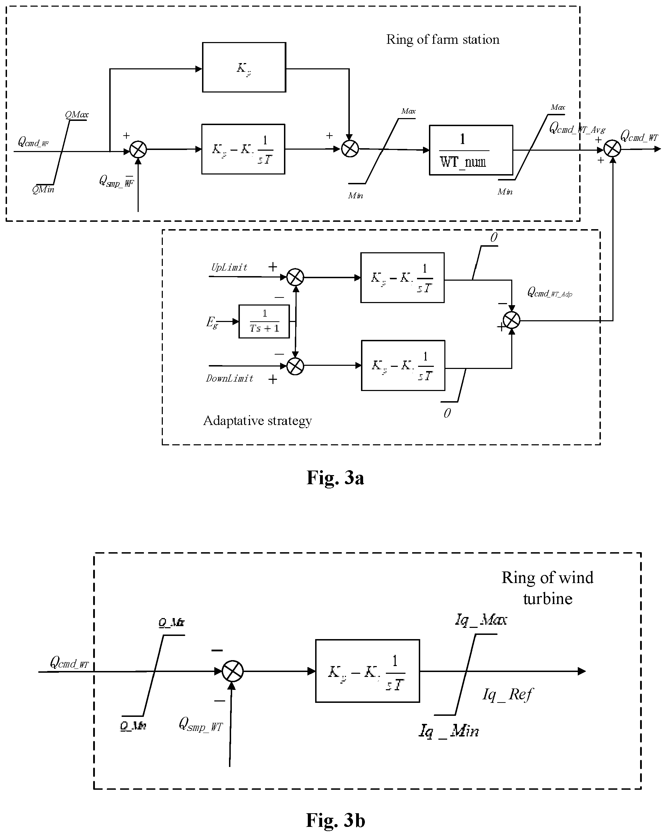

Referring to Fig. 3a and Fig. 3b, a difference between the second optional implementation and the first optional implementation is that the modification value (i.e. the reactive control modification parameter) $Q_{cmd\_WT\_Adp}$ in the adaptive strategy is implemented by using a PI controller. A specific implementation may include:

(1) A voltage $E_g$ of the wind turbine at the point of common coupling is collected and is filtered to obtain a filtered point of common coupling voltage.

(2) A difference between the voltage upper limit Up-Limit and the $E_g$ filter value is calculated and is adjusted by a PI controller to obtain a first adjustment value, of which an amplitude of an upper limit is 0.

(3) A difference between the voltage lower limit DownLimit and the $E_g$ filter value is calculated and is adjusted by the PI controller to obtain a second adjustment value, of which an amplitude of a lower limit is 0.

(4) The first adjustment value and the second adjustment value, which have been subjected to the amplitude limitation are added together to obtain the adaptive modification value of the reactive instruction $Q_{cmd\_WT\_Adp}$ for the wind turbine.

(5) The average reactive power instruction $Q_{cmd\_WT\_Avg}$ for the wind turbine is added with the adaptive modification value of the reactive instruction $Q_{cmd\_WT\_Adp}$ for the wind turbine to obtain the reactive power $Q_{cmd\_WT}$ of the wind turbine.

Third Optional Implementation:

For the calculation of the first voltage value based on the difference between the preset voltage upper limit and the voltage at the point of common coupling, the method may further include: adjusting, by a second proportional integral controller, the difference between the preset voltage upper limit and the voltage at the point of common coupling to obtain the first voltage value; and for the calculation of the second voltage value based on the difference between the preset voltage lower limit and the voltage at the point of common coupling, the method may further include: adjusting, by a third proportional integral controller, the difference between the preset voltage lower limit and the voltage at the point of common coupling to obtain the second voltage value.

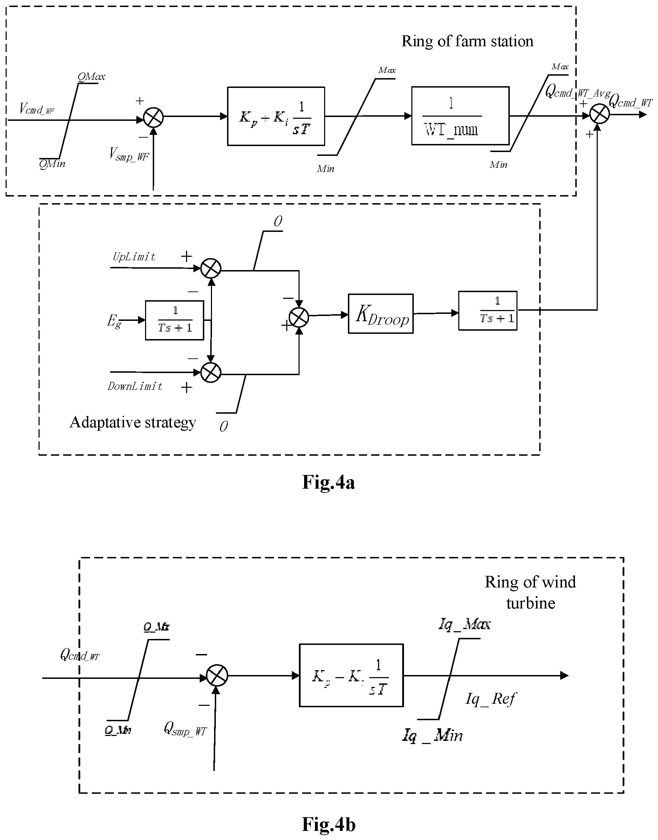

Referring to Figs. 4a and 4b, a difference between the third optional implementation and the first optional implementation is that a control target of the farm station is a voltage of the wind farm at the point of common coupling.

Specifically, a difference between a voltage target value $V_{cmd\_WF}$ of the wind farm station and the voltage $V_{cmd\_WT}$ of the wind farm at the point of common coupling is calculated and is subjected to a closed-loop adjustment by a PI controller (i.e. the second proportional integral controller), and is outputted through another PI controller (i.e. the third proportional integral controller), and is further divided by the number of wind turbines currently operating in the wind farm, to obtain the average reactive power $Q_{cmd\_WT\_Avg}$ for the wind turbine.

Fourth Optional Implementation:

On the basis of the first optional implementation, in the calculation of the first voltage value based on the difference between the preset voltage upper limit and the voltage at the point of common coupling and in the calculation of the second voltage value based on the difference between the preset voltage lower limit and the voltage at the point of common coupling, the voltage at the point of common coupling may be a voltage after being filtered.

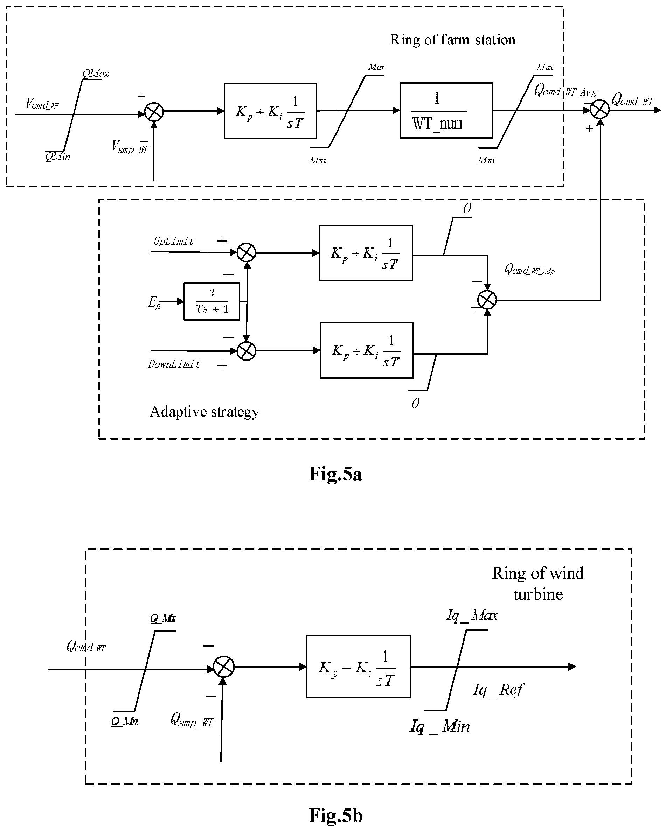

Referring to Figs. 5a and 5b, a difference between the fourth optional implementation and the second optional implementation is that a control target of the farm station is the voltage of the wind farm at the point of common coupling.

A difference between a voltage target value $V_{cmd\_WF}$ of the wind farm station and the voltage $V_{cmd\_WT}$ of the wind farm at the point of common coupling is calculated and is subjected to a closed-loop adjustment by a PI controller (i.e. the second proportional integral controller), and is outputted through another PI controller (i.e. the third proportional integral controller), and is further divided by the number of wind turbines currently operating in the wind farm, to obtain the average reactive power $Q_{cmd\_WT\_Avg}$ for the wind turbine.

In the embodiments of the present application, the wind farm can use a SVG (Static Var Generator) and other auxiliary equipment to perform reactive compensation at the farm station, instead of performing an overall reactive compensation for the cluster of wind turbines, which can solve a problem of fault protection of a wind turbine in a certain location caused by a large reactive power, thereby maximizing reactive capabilities of the cluster of wind turbines in the wind farm.

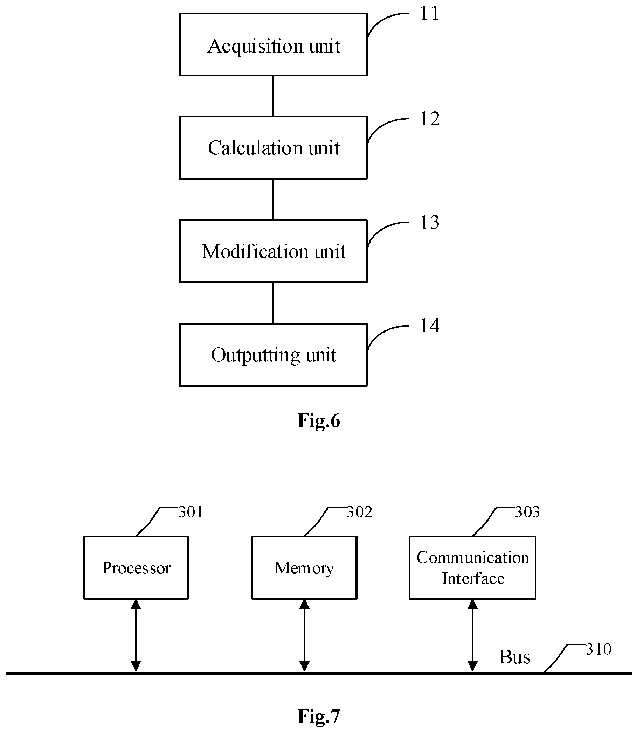

Fig. 6 illustrates a schematic structure diagram of an apparatus for adjusting a reactive power in a wind farm according to an embodiment of the present application. The apparatus for adjusting a reactive power in a wind farm according to the embodiment of the present application is applicable to perform the method for adjusting a reactive power in a wind farm provided by the embodiments of the present application. For some parts that are not described in detail in the embodiment of the apparatus for adjusting a reactive power in a wind farm according to the embodiment of the present application, reference may be made to the description with respect to the embodiments of the method for adjusting a reactive power in a wind farm provided by the embodiments of this application.

As shown in Fig. 6, the apparatus for adjusting a reactive power in a wind farm according to the embodiment of the present application includes an acquisition unit 11, a calculation unit 12, a modification unit 13 and an outputting unit 14.

The acquisition unit 11 is configured to acquire a wind farm reactive control parameter issued by a grid to the wind farm.

The calculation unit 12 is configured to calculate an average reactive control parameter for each of wind turbines in the wind farm according to the wind farm reactive control parameter.

The modification unit 13 is configured to modify, for each of the wind turbines, the average reactive control parameter according to a difference between a voltage of the wind turbine at a point of common coupling and a preset voltage limit to obtain wind turbine reactive control parameters of the respective wind turbines.

The outputting unit 14 is configured to output the wind turbine reactive control parameters to the respective wind turbines.

Optionally, the calculation unit 12 may include:

a first calculation subunit configured to calculate a reactive loss parameter of the wind farm reactive control parameter according to an on-farm loss coefficient;

a first adjustment subunit configured to adjust, by a first proportional integral controller, a reactive parameter difference to obtain a reactive parameter error, wherein the reactive parameter difference is a difference between the wind farm reactive control parameter and a measured reactive parameter which is collected at the point of common coupling for the wind farm; and

a second calculation subunit configured to calculate the average reactive control parameter based on a number of the wind turbines in the wind farm and a sum of the reactive loss parameter and the reactive parameter error.

Optionally, under a condition that the wind farm reactive control parameter is a reactive power value, the measured reactive parameter is also a reactive power value; and under a condition that the wind farm reactive control parameter is a reactive voltage value, the measured reactive parameter is also a reactive voltage value.

Optionally, the modification unit 13 may include:

a third calculation subunit configured to calculate a first voltage value based on a difference between a preset voltage upper limit and the voltage at the point of common coupling;

a fourth calculation subunit configured to calculate calculating a second voltage value based on a difference between a preset voltage lower limit and the voltage at the point of common coupling;

a fifth calculation subunit configured to limit the first voltage value to be not smaller than 0 and limit the second voltage value to be not greater than 0, and calculate a reactive control modification parameter for the wind turbine based on the first voltage value and the second voltage value; and

a sixth calculation subunit configured to calculate a sum of the average reactive control parameter and the reactive control modification parameter to obtain the wind turbine reactive control parameter of the wind turbine.

Optionally, the third calculation subunit may be further configured to calculate the difference between the preset voltage upper limit and the voltage at the point of common coupling to obtain the first voltage value;

the fourth calculation subunit may be further configured to calculate the difference between the preset voltage lower limit and the voltage at the point of common coupling to obtain the second voltage value;

the fifth calculation subunit may be further configured to calculate a sum of the first voltage value and the second voltage value to obtain a third voltage; and calculate a product of the third voltage and a droop coefficient to obtain the reactive control modification parameter.

Optionally, the third calculation subunit may be further configured to adjust, by a second proportional integral controller, the difference between the preset voltage upper limit and the voltage at the point of common coupling to obtain the first voltage value;

the fourth calculation subunit may be further configured to adjust, by a third proportional integral controller, the difference between the preset voltage lower limit and the voltage at the point of common coupling to obtain the second voltage value; and the fifth calculation subunit may be further configured to calculate a sum of the first voltage value and the second voltage value to obtain the reactive control modification parameter.

Optionally, the voltage at the point of common coupling may be a voltage after being filtered.

Optionally, the outputting unit 14 may include:

a second adjustment subunit configured to adjust, by a fourth proportional integral controller, a difference between the wind turbine reactive control parameter of each of the wind turbines and a reactive parameter collected at the point of common coupling for the wind turbine to obtain a reactive current target value of the wind turbine; and

a control subunit configured to control a reactive current of the wind turbine by taking the reactive current target value as a target.

Optionally, the apparatus for adjusting a reactive power of the wind farm according to the embodiments of the present application may be provided in a wind farm controller (WFC) or a wind turbine converter. The WFC is a hardware component in a farm cluster control system for implementing a cluster control decision on the wind turbines from the wind farm side, and includes a real-time core part and a non-real-time core part. The WFC can be used to implement a control of wind turbines in a wind farm.

According to the apparatus for adjusting a reactive power in a wind farm, a wind farm reactive control parameter issued by a grid to the wind farm is acquired;

an average reactive control parameter for each of wind turbines in the wind farm is calculated according to the wind farm reactive control parameter; the average reactive control parameter for each of the wind turbines is modified according to a difference between a voltage of the wind turbine at a point of common coupling and a preset voltage limit to obtain wind turbine reactive control parameters of the respective wind turbines; and the wind turbine reactive control parameters are outputted to the respective wind turbines. With the embodiments of the present application, the technical problem in the related arts that a reactive power for a cluster of wind turbines in a wind farm is limited due to different voltages at respective locations of the wind turbines can be solved by providing an adaptive adjustment for voltages of the respective wind turbines, in which a reactive output for a wind turbine is reduced when a voltage of the wind turbine approaches to a fault protection threshold so as to avoid it entering a fault state, thereby increasing a reactive output for the cluster of wind turbine in the wind farm.

The embodiments of the present application also provide an electronic device. The electronic device includes: a processor and a memory storing program instructions, wherein the processor is configured to execute the program instructions to implement the method for adjusting a reactive power in a wind farm according to the embodiments of the present application. Optionally, the electronic device may be provided in a wind farm controller or a wind turbine converter.

Fig. 7 is a schematic diagram illustrating a hardware structure of an electronic device according to an embodiment of the present application.

The electronic device includes a processor 301 and a memory 302 storing program instructions.

Specifically, the processor 301 may include a central processing unit (CPU), or an application specific integrated circuit (Application Specific Integrated Circuit, ASIC), or may be configured to implement one or more integrated circuits according to the embodiments of the present application.

The memory 302 may include a mass storage for data or instructions. By way of example, rather than limitation, the memory 302 may include a Hard Disk Drive (HDD), a floppy disk drive, a flash memory, an optical disk, a magneto-optical disk, a magnetic tape, or a Universal Serial Bus (USB) drive or a combination of two or more of these. The memory 302 may include a removable or a non-removable (or fixed) media, where appropriate. The memory 302 may be internal or external to an integrated gateway disaster recovery device, where appropriate. In some embodiments, the memory 302 may be a non-volatile solid-state memory.

In some embodiments, the memory 302 may include a read-only memory (ROM). The ROM may be a mask-programmed ROM, a programmable ROM (PROM), an erasable PROM (EPROM), an electrically erasable PROM (EEPROM), an electrically rewritable ROM (EAROM) or a flash memory, or a combination of two or more of these, where appropriate.

The memory may include a read only memory (ROM), a random access memory (RAM), a magnetic disk storage media devices, an optical storage media devices, a flash memory devices, and any other electrical, optical or other physical/tangible memory storage device. Thus, generally, the memory includes one or more tangible (non-transitory) readable storage media (e.g., memory devices) encoded with software including computer-executable instructions, and when the software is executed (e.g., by one or more processor), it is operable to perform those operations described with respect to the method according to any one of aspects of the present application.

The processor 301 reads the program instructions stored in the memory 302 and executes the program instructions to implement the method for adjusting a reactive power in a wind farm according to any one of the foregoing embodiments.

In one example, the electronic device may further include a communication interface 303 and a bus 310. As shown in Fig. 7, the processor 301, the memory 302, and the communication interface 303 are connected through the bus 310 to implement communication with each other.

The communication interface 303 is mainly configured to implement communication among the modules, means, units and/or devices in the embodiments of the present application.

The bus 310 may include hardware, software, or the both, and is provided for coupling various components of the electronic device with each other. By way of example, rather than limitation, the bus may include an Accelerated Graphics Port (AGP) or any other graphics bus, an Enhanced Industry Standard Architecture (EISA) bus, a Front Side Bus (FSB), a HyperTransport (HT) interconnect, an Industry Standard Architecture (ISA) bus, an Infinite Bandwidth Interconnect, a Low Pin Count (LPC) bus, a Memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local (VLB) bus or other suitable buses or a combination of two or more of these. The bus 310 may include one or more buses, where appropriate. Although the embodiments of the present application are described and illustrated with a particular bus, the present application may consider any suitable bus or interconnection.

In view of the method for adjusting a reactive power in a wind farm in the forging embodiments, the embodiments of the present application may further provide a readable storage medium for implementation. The readable storage medium stores program instructions and when the program instructions are executed a processor, the method for adjusting a reactive power in a wind farm according to any one of the foregoing embodiments is implemented.

It should be understood that the present application is not limited to the specific configurations and processes described above and illustrated in the figures. For sake of brevity, detailed descriptions of known methods are omitted here. In the above-described embodiments, several specific steps are described and shown as examples. However, the method process of the present application is not limited to the specific steps described and shown, and those skilled in the art can make various changes, modifications and additions, or change the sequence of steps after understanding the spirit of the present application.

The functional blocks shown in the above-described structural block diagrams may be implemented as hardware, software, firmware, or a combination thereof. When implemented in hardware, it may be, for example, an electronic circuit, an application specific integrated circuit (ASIC), suitable firmware, a plug-in, a function card, or the like. When implemented in software, elements of the present application may be programs or code segments for performing the required tasks. The program or code segments may be stored in a machine-readable medium or transmitted over a transmission medium or communication link by a data signal carried in a carrier wave. Examples of the machine-readable medium include an electronic circuit, a semiconductor memory device, a ROM, a flash memory, an erasable ROM (EROM), a floppy disk, a CD-ROM, an optical disk, a hard disk, a fiber optic medium, a radio frequency (RF) link, and the like. The code segments may be downloaded via a computer network such as the Internet, an intranet, or the like.

It should also be noted that the exemplary embodiments mentioned in this application describe some methods or systems based on a series of steps or devices. However, the present application is not limited to the order of the above steps, that is, the steps may be performed in the order mentioned in the embodiments, or may be performed in a different order from that described in the embodiments, or several steps may be performed simultaneously.

The various aspects of the present application have been described by reference to a flowchart and/or a block diagram of the method, apparatus (system) and program product according to the embodiments of the present application. It should be understood that each box in the flowchart and/or block diagram and the combination of the boxes in the flowchart and/or block diagram may be implemented by program instructions. These program instructions may be provided to a general-purpose computer, a special purpose computer, or a processor of any other programmable data processing device to generate a machine, such that these instructions, when executed by the computer or the processor of the other programmable data processing device, enable implementation of functions/actions specified in one or more boxes of the flowchart and/or block diagram. Such a processor may be, but is not limited to, a general-purpose processor, an application-specific processor, or a field programmable logic circuit. It should be also understood that each box in the block diagram and/or flowchart and the combination of boxes in the block diagram and/or flowchart may be implemented by a specialized hardware performing specified functions or actions, or may be implemented by a combination of a specialized hardware and computer instructions.

The above descriptions are only specific implementations of the present application. Those skilled in the art can clearly understand that, for convenience and brevity of description, specific operations of the above-described systems, modules and units may refer to those in the foregoing method embodiments and will not be repeated here. It should be understood that the protection scope of the present application is not limited to the embodiments, and those skilled in the art can easily think of various equivalent modifications or replacements within the technical scope disclosed in the present application, and these modifications or replacements should all fall within the protection scope of the present application.

## Claims

1. A method for adjusting a reactive power in a wind farm, comprising:

   acquiring a wind farm reactive control parameter issued by a grid to the wind farm;
   calculating an average reactive control parameter for each of wind turbines in the wind farm according to the wind farm reactive control parameter;
   modifying, for each of the wind turbines, the average reactive control parameter according to a difference between a voltage of the wind turbine at a point of common coupling and a preset voltage limit to obtain wind turbine reactive control parameters of the respective wind turbines; and
   outputting the wind turbine reactive control parameters to the respective wind turbines.

2. The method according to claim 1, wherein the calculation of the average reactive control parameter for each of wind turbines in the wind farm according to the wind farm reactive control parameter comprises:

   calculating a reactive loss parameter of the wind farm reactive control parameter according to an on-farm loss coefficient;
   adjusting, by a first proportional integral controller, a reactive parameter difference to obtain a reactive parameter error, wherein the reactive parameter difference is a difference between the wind farm reactive control parameter and a measured reactive parameter which is collected at the point of common coupling for the wind farm; and
calculating the average reactive control parameter based on a number of the wind turbines in the wind farm and a sum of the reactive loss parameter and the reactive parameter error.

3.  The method according to claim 2, wherein under a condition that the wind farm reactive control parameter is a reactive power value, the measured reactive parameter is also a reactive power value; and under a condition that the wind farm reactive control parameter is a reactive voltage value, the measured reactive parameter is also a reactive voltage value.

4.  The method according to claim 2, wherein the modification of the average reactive control parameter according to the difference between the voltage of the wind turbine at the point of common coupling and a preset voltage limit to obtain the wind turbine reactive control parameters of the respective wind turbines comprises:

    calculating a first voltage value based on a difference between a preset voltage upper limit and the voltage at the point of common coupling;
    calculating a second voltage value based on a difference between a preset voltage lower limit and the voltage at the point of common coupling;
    limiting the first voltage value to be not smaller than 0 and limiting the second voltage value to be not greater than 0, and calculating a reactive control modification parameter for the wind turbine based on the first voltage value and the second voltage value; and
    calculating a sum of the average reactive control parameter and the reactive control modification parameter to obtain the wind turbine reactive control parameter of the wind turbine.

5.  The method of claim 4, wherein

    the calculation of the first voltage value based on the difference between the preset voltage upper limit and the voltage at the point of common coupling comprises:
    calculating the difference between the preset voltage upper limit and the voltage at the point of common coupling to obtain the first voltage value;
    the calculation of the second voltage value based on the difference between the preset voltage lower limit and the voltage at the point of common coupling comprises:
    calculating the difference between the preset voltage lower limit and the voltage at the point of common coupling to obtain the second voltage value; and

the calculation of the reactive control modification parameter for the wind turbine based on the first voltage value and the second voltage value comprises:

    calculating a sum of the first voltage value and the second voltage value to obtain a third voltage; and
    calculating a product of the third voltage and a droop coefficient to obtain the reactive control modification parameter.

6.  The method of claim 4, wherein

    the calculation of the first voltage value based on the difference between the preset voltage upper limit and the voltage at point of common coupling comprises:
    adjusting, by a second proportional integral controller, the difference between the preset voltage upper limit and the voltage at the point of common coupling to obtain the first voltage value;
    the calculation of the second voltage value based on the difference between the preset voltage lower limit and the voltage at the point of common coupling comprises:
    adjusting, by a third proportional integral controller, the difference between the preset voltage lower limit and the voltage at the point of common coupling to obtain the second voltage value; and
    the calculation of the reactive power control adjustment parameter of the wind turbine based on the first voltage value and the second voltage value comprises:
    calculating a sum of the first voltage value and the second voltage value to obtain the reactive power control modification parameter.

7.  The method according to claim 4, wherein in the calculation of the first voltage value based on the difference between the preset voltage upper limit and the voltage at the point of common coupling and in the calculation of the second voltage value based on the difference between the preset voltage lower limit and the voltage at the point of common coupling, the voltage at the point of common coupling is a voltage after being filtered.

8.  The method according to claim 1, wherein the outputting of the wind turbine reactive control parameters to the respective wind turbines comprises:

    adjusting, by a fourth proportional integral controller, a difference between the wind turbine reactive control parameter of each of the wind turbines and a reactive parameter collected at the point of common coupling for the wind turbine to obtain a reactive current target value of the wind turbine; and

controlling a reactive current of the wind turbine by taking the reactive current target value as a target.

9. An apparatus for adjusting a reactive power in a wind farm, comprising:

an acquisition unit configured to acquire a wind farm reactive control parameter issued by a grid to the wind farm;

a calculation unit configured to calculate an average reactive control parameter for each of wind turbines in the wind farm according to the wind farm reactive control parameter;

a modification unit configured to modify, for each of the wind turbines, the average reactive control parameter according to a difference between a voltage of the wind turbine at a point of common coupling and a preset voltage limit to obtain wind turbine reactive control parameters of the respective wind turbines;

an outputting unit configured to output the wind turbine reactive control parameters to the respective wind turbines.

10. The apparatus according to claim 9, wherein the calculation unit comprises:

a first calculation subunit configured to calculate a reactive loss parameter of the wind farm reactive control parameter according to an on-farm loss coefficient;

a first adjustment subunit configured to adjust, by a first proportional integral controller, a reactive parameter difference to obtain a reactive parameter error, wherein the reactive parameter difference is a difference between the wind farm reactive control parameter and a measured reactive parameter which is collected at the point of common coupling for the wind farm; and

a second calculation subunit configured to calculate the average reactive control parameter based on a number of the wind turbines in the wind farm and a sum of the reactive loss parameter and the reactive parameter error.

11. The apparatus according to claim 10, wherein the apparatus for adjusting a reactive power of the wind farm is provided in a wind farm controller or a wind turbine converter.

12. An electronic device, comprising: a processor and a memory storing program instructions;
wherein the processor is configured to execute the program instructions to implement the method for adjusting a reactive power in a wind farm according to any one of claims 1 to 8.

13. The electronic device according to claim 12, wherein the electronic device is provided in a wind farm controller or a wind turbine converter.

14. A readable storage medium storing program instructions, which are executable by a processor to implement the method for adjusting a reactive power in a wind farm according to any one of claims 1 to 8.

15. A program product including instructions which, when executed by a processor of an electronic device, cause the electronic device to implement the method for adjusting a reactive power in a wind farm according to any one of claims 1 to 8.

acquiring a wind farm reactive control parameter issued by a grid to the wind farm — 101

calculating an average reactive control parameter for each of wind turbines in the wind farm according to the wind farm reactive control parameter — 102

modifying, for each of the wind turbines, the average reactive control parameter according to a difference between a voltage of the wind turbine at a point of common coupling and a preset voltage limit to obtain wind turbine reactive control parameters of the respective wind turbines — 103

outputting the wind turbine reactive control parameters to the respective wind turbines — 104

**Fig. 1**

Ring of farm station

$$Q_{cmd\_WF} \quad \overline{OMax} \quad + \quad K_p - K_i \frac{1}{sT} \quad + \quad Max \quad \frac{1}{WT\_num} \quad Max \quad Q_{cmd\_WT\_Ave} \quad + \quad Q_{cmd\_WT}$$

$K_p$

$Q_{smp\_WF}$ $\overline{QMin}$ $Min$ $Min$ $+$

$$0$$

$UpLimit \quad + \quad \quad -$

$E_g \quad \frac{1}{Ts+1} \quad - \quad + \quad K_{Droop} \quad \frac{1}{Ts+1} \quad Q_{cmd\_WT\_Adp}$

$DownLimit \quad - \quad +$

$$0$$

Adaptive strategy

**Fig. 2a**

Ring of wind turbine

$$Q_{cmd\_WT} \quad Q\_Max \quad - \quad K_p - K_i \frac{1}{sT} \quad Iq\_Max$$

$Q\_Min \quad Q_{smp\_WT} \quad - \quad Iq\_Ref \quad Iq\_Min$

**Fig. 2b**

**Fig. 3a**

**Fig. 3b**

Ring of farm station

$V_{cmd\_WF}$

QMax

QMin

$V_{smp\_WF}$

$+$ $-$

$K_p + K_i \dfrac{1}{sT}$

Max

Min

$\dfrac{1}{WT\_num}$

Max

Min

$Q_{cmd\_WT\_Avg}$ $+$ $+$ $Q_{cmd\_WT}$

UpLimit $+$

$E_g$ → $\dfrac{1}{Ts+1}$

$-$

$-$

$+$

0

$-$

$+$

$K_{Droop}$

$\dfrac{1}{Ts+1}$

DownLimit $+$

Adaptative strategy 0

**Fig.4a**

Ring of wind
turbine

$Q_{cmd\_WT}$

Q_Max

Q_Min

$Q_{smp\_WT}$

$-$

$-$

$K_p - K_i \dfrac{1}{sT}$

Iq_Max

Iq_Min

Iq_Ref

**Fig.4b**

**Fig.5a**

**Fig.5b**

Acquisition unit — 11

Calculation unit — 12

Modification unit — 13

Outputting unit — 14

**Fig.6**

—301     —302     —303

Processor     Memory     Communication Interface

Bus —310

**Fig.7**

<div align="center">**INTERNATIONAL SEARCH REPORT**</div>

| International application No. |
| --- |
| **PCT/CN2022/080727** |

**A. CLASSIFICATION OF SUBJECT MATTER**

H02J 3/50(2006.01)i; H02J 3/16(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 北京金风科创, 无功, 功率, 电压, 电流, 调整, 调节, 修正, 校正, 平均, 等比例, reactive, power, voltage, current, adjust, amendment, correction, average, constant proportional

**C. DOCUMENTS CONSIDERED TO BE RELEVANT**

| Category* | Citation of document, with indication, where appropriate, of the relevant passages | Relevant to claim No. |
| --- | --- | --- |
| A | CN 105244923 A (CHINA ELECTRIC POWER RESEARCH INSTITUTE STATE GRID CORP. CHINA et al.) 13 January 2016 (2016-01-13) <br> description, paragraphs [0078]-[0168], and figures 1-8 | 1-15 |
| A | CN 102299527 A (GUODIAN UNITED POWER TECHNOLOGY CO., LTD.) 28 December 2011 (2011-12-28) <br> entire document | 1-15 |
| A | US 2017338652 A1 (GENERAL ELECTRIC COMPANY) 23 November 2017 (2017-11-23) <br> entire document | 1-15 |

☐ Further documents are listed in the continuation of Box C.    ☑ See patent family annex.

| | |
| --- | --- |
| \*   Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **18 May 2022** | **18 July 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/080727**

| Patent document cited in search report | | | Publication date (day/month/year) | Patent family member(s) | | | Publication date (day/month/year) |
|---|---|---|---|---|---|---|---|
| CN | 105244923 | A | 13 January 2016 | CN | 105244923 | B | 08 November 2019 |
| CN | 102299527 | A | 28 December 2011 | CN | 102299527 | B | 01 May 2013 |
| US | 2017338652 | A1 | 23 November 2017 | WO | 2017201503 | A1 | 23 November 2017 |
| | | | | US | 10027118 | B2 | 17 July 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111682431